# EUROPÄISCHE PATENTANMELDUNG

(11) **EP 0 776 932 A1**
(43) Veröffentlichungstag der Anmeldung: **04.06.1997**
(21) Anmeldenummer: 96118752.3
(22) Anmeldetag: 22.11.1996
(51) Int. Cl.: C08K 3/32

(54) **Poly(meth)acrylimide mit bei thermischer Belastung verbesserter Farbstabilität**

(30) Priorität: 30.11.1995 DE 19544562
(71) Anmelder: Röhm GmbH, 64293 Darmstadt (DE)
(72) Erfinder: Albrecht, Klaus, Dr., 55129 Mainz (DE); Höss, Werner, 63150 Heusenstamm (DE); Schikowsky, Hartmut, 64283 Darmstadt (DE)

(57) **Zusammenfassung**

Die Erfindung betrifft die Herstellung, Verarbeitung und Verwendung von wärmeformbeständigen Thermoplasten, insbesondere von Formmassen auf Basis von imidiertem Polymethylmethacrylat. Sie beschreibt Formmassen, die nach Verarbeitung zu Formkörpern, z.B. Lampenabdeckungen, bei thermischer Belastung nur eine geringe Zunahme des Gelbwertes aufweisen. Es werden dabei Entfärbungsmittel auf Basis von reduzierend wirkenden anorganischen Phosphorverbindungen verwendet, die zu einem späten Verarbeitungszeitpunkt, z.B. erst beim Compoundieren zugesetzt werden.

## Beschreibung

### Gebiet der Erfindung

Die Erfindung betrifft die Herstellung, Verarbeitung und Verwendung von wärmeformbeständigen Thermoplasten, insbesondere von Formmassen auf Basis von imidiertem Polymethylmethacrylat. Sie beschreibt Formmassen, die nach Verarbeitung zu Formkörpern, z.B. Lampenabdeckungen, bei thermischer Belastung nur eine geringe Zunahme des Gelbwertes aufweisen.

### Stand der Technik

Polymere auf Basis von imidiertem Polymethylmethacrylat sind eine eigene Klasse hochtransparenter und dabei besonders wärmeformbeständiger Thermoplaste. Formkörper aus diesem Material können auf Dauer deutlich höheren Temperaturen ausgesetzt werden als Formkörper aus anderen hochtransparenten Thermoplasten wie z.B. Polymethylmethacrylat (PMMA). Naturgemäß steigt durch die höhere thermische Belastung auch die Gefahr der Verfärbung. Um diese Hochleistungs-Thermoplaste einsetzen zu können, z.B. zur Abdeckung von Lampen, ist es notwendig, sie möglichst gegen eine thermische bedingte Verfärbung, sichtbar als eine Zunahme des Gelbwertes, zu schützen. Der Gelbwert wird nach DIN 6167 (D65/10) bzw. nach ASTM D 1925 gemessen.

In der RD 321 114 wird ein Verfahren zur Verringerung der Gelbstichigkeit von Polymethacrylimiden beschrieben, indem man die Imidierung in einer sauerstofffreien Atmosphäre durchführt. Die Entfernung des Sauerstoffs ist hier nur durch eine aufwendiges Destillationsverfahren zu erreichen, was wirtschafflich ungünstig ist.

In der EP-A 576 877 wird ein Polymerisat auf Basis Polymethacryl- und Polyacrylimid mit niedrigem Gelbwert beschrieben, wobei Salze der Phosphin- oder Phosphonsäure bei der Imidierungsreaktion zugesetzt werden.
Die Imidierungsreaktion besteht in einer Umsetzung eines Polymeren auf Basis von C₁-C₂₀-Alkylestern der Methacrylsäure und/oder der Acrylsäure mit Ammoniak oder einem primären alkylsubstituierten Amin. Sie erfolgt bei hohen Drucken und hohen Temperaturen in Schmelze oder in Lösung. Nach der EP-A 576 877 wird die Phosphorverbindung dem Reaktionsgemisch zugegeben und somit diesen drastischen Bedingungen ausgesetzt. Das Ergebnis ist eine Formmasse, die eine relativ geringe Gelbfärbung aufweist. Bei der Überprüfung dieses Standes der Technik durch die Anmelderin wurde aber gefunden, daß die aus diesen Formmassen hergestellten Formkörper bei thermischer Belastung deutliche Vergilbungserscheinungen zeigen. Sie liegen nur anfangs auf einem niedrigen Niveau bezüglich Gelbwert; mit Fortdauer der thermischen Belastung aber steigt der Gelbwert sukzessive an. Eine Stabilisierungswirkung durch die vorher zugesetzte reduzierende Phosphorverbindung ist hier kaum mehr erkennbar. Es ist daher anzunehmen, daß diese unter den Imidierungsbedingungen weitgehend verbraucht ist oder sich zersetzt hat.
Die Einsatzmengen an den Phosphorverbindungen liegen dementsprechend hoch, vermutlich um einen Wirkungsverlust auszugleichen: Es werden bevorzugt Mengen von 0.1-1 Gew.-% bezogen auf die Menge an zu imidierendem Polymeren eingesetzt. Eine Erhöhung der Zusatzmenge kommt kaum mehr in Frage, weil dabei andere Eigenschaften des Polymerisats verschlechtert werden: Es tritt nach den Erkenntnissen der Anmelderin bereits bei einem Zusatz von mehr als 0.1% Gew.-% der reduzierenden Phosphorverbindung eine Trübung im Polymerisat auf.
Als Indiz für eine Zersetzung der reduzierenden Phosphorverbindung bei dem hier angesprochenen Verfahren mag gelten, daß bei Versuchen der Anmelderin entsprechend EP-A 576 877 die Entwicklung von Phosphin registriert wurde, insbesondere bei hohen Einsatzkonzentrationen. Als eine der hier stattfindenden Zersetzungsreaktionen ist demnach eine Disproportionierung des Hypophosphits anzunehmen.

Der Einsatz von reduzierenden, organischen Phosphorverbindungen als Antioxidantien, die u.a. die Verfärbung von Kunststoff-Formmassen bei thermischer Belastung verhindern sollen, ist bekannt (vgl. beispielweise Kirk-Othmer, Encyclopedia of Chemical Technology, 3rd. Ed., Vol. 3, Seite 133, Wiley, New York, 1978). Sie werden fallweise auch den Formmassen vor der Verarbeitung, also beim Compoundierschritt zugegeben. So wird gemäß der japanischen Anmeldung Kokai Tokkyo Koho JP 60 123 547 eine Verbesserung der Verfärbung von Copolymerisaten aus Methylmethacrylat-, Styrol- und Maleinsäureanhydrid- Monomereinheiten unter Spritzgußbedingungen bei höheren Temperaturen beobachtet, wenn solche Copolymerisate vor der Verarbeitung durch Spritzguß mit wenigstens einem Phosphaphenanthren-Derivat und zusätzlich einem sterisch gehinderten Phenol, einem Thiopropionsäureester oder einem Phosphorsäureester als Stabilisatoren gegen den oxidativen Abbau versetzt werden.
Jpn. Kokai Tokkyo Koho JP 60 120 735 beschreibt Copolymerisate aus Methylmethacrylat, Vinylaromat und einpolymerisierten cyclischen Anhydriden, denen zur Erhöhung der thermischen Stabilität und zur Vermeidung der Verfärbung solcher Copolymerisate bei thermischer Beanspruchung in der Schmelze, beispielsweise im Spritzguß, Phosphorsäureester und weitere Stabilisatoren auf Basis sterisch gehinderter Phenole zugegeben werden.
In Jpn. Kokkai Tokkyo Koho JP 03 167 245 wird die Stabilisierung von Copolymerisaten aus Methylmethacrylat, N-substituierten Maleinimiden und weiteren copolymerisierbaren Monomeren mit Verbindungen, ausgewählt aus der Gruppe der alkylsubstituierten Triarylphosphite, der Dialkylpentaerythroldiphosphite sowie der Phosphaphenanthren-Derivate beansprucht.
Jpn. Kokkai Tokkyo Koho JP 63 163 306 umfaßt Copolymerisate aus Methylmethacrylat und C₈- bis C₂₀-Alkylmethacrylat als Kernmaterial für optische Lichtleiterfasern, die als Stabilisatoren Phosphite, wie beispielsweise sterisch gehinderte Diarylpentaerythroldiphosphite, oder Thiophosphite zur Vermeidung der Verfärbung der Copolymerisate bei thermischer Belastung enthalten.
In den hier genannten 4 japanischen Patenten sind durchwegs sterisch gehinderte, organische Phosphite genannt oder organische Phosphite zusammen mit sterisch gehinderten Phenolen. Anorganische, reduzierende Phosphorverbindungen werden nicht genannt.

Auch das deutsche Gebrauchsmuster 2 95 04 693.7 beschreibt die Verwendung von sterisch gehinderten organischen Phophitverbindungen in Formmassen aus Copolymerisaten bestehend aus den Monomereinheiten von Alkylmethacrylat, Vinylaromat und Maleinsäureanhydrid, sowie gegebenenfalls Alkylacrylat. Die organischen Phosphorverbindungen werden fallweise auch dem fertigen, granulierten oder gemahlenen Polymerisat vor der Weiterverarbeitung zugesetzt.

Organische Phosphorverbindungen, nämlich sterisch gehinderte Organophosphite oder Organophosphonite werden laut EP-A 396 336 auch zur Entfärbung und zur Stabilisierung gegen Blasenbildung in Polymeren auf Basis (N-Alkyl)dialkylglutarimid und (N-Hydrogen)dialkylglutarimid eingesetzt. In der EP-A 463 754 werden zu demselben Zweck Trialkylphosphite und aliphatische Dicyclo-diphosphite verwendet.
In den zuletzt genannten drei Patentanmeldungen werden ebenfalls nur organische, reduzierende sterisch gehinderte Phosphorverbindungen genannt, nicht aber anorganische reduzierende Phosphorverbindungen.

### Aufgabe und Lösung

Der Stand der Technik läßt keine Formmassen auf Basis von imidiertem Polymethylmethacrylat erwarten, die für die Herstellung von wärmeformbeständigen, hochtransparenten gelbstichfreien Formkörpern, welche auch bei fortdauernder thermischer Belastung verringerte Gelbwertzunahme zeigen, geeignet sind. Solche Formmassen bereitzustellen, ist das Ziel der Erfindung. Darüber hinaus sollen die erfindungsgemäßen Formmassen durch ein einfaches Verfahren in einem Schritt hergestellt werden können.

Die Aufgabe wird durch ein spezielles Verfahren zur Herstellung von Formmassen FM gelöst, wobei letztere aus einem Polymerisat PM bestehen, welches Einheiten der Formel I 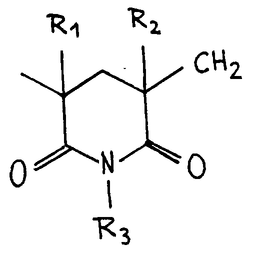 enthält, in der R₁ und R₂ für Wasserstoff und Methyl stehen und R₃ Wasserstoff, C₁-C₁₈-Alkyl, C₅-C₈-Cycloalkyl, C₆-C₁₀-Aryl, C₆-C₁₀-Aryl-C₁-C₄-alkyl bedeutet, wobei diese Reste bis zu dreifach mit Resten ausgewählt aus der Gruppe bestehend aus C₁-C₄-Alkyl, C₁-C₄-Alkoxy und Halogen substituiert sein können, hergestellt in einer an sich bekannten Imidisierungsreaktion in einem Reaktionsextruder,
dadurch gekennzeichnet,
daß dem Polymerisat PM nach Abschluß der Imidierungsreaktion 0.005 bis 1 Gewichtsprozent einer oder mehrerer reduzierend wirkender anorganischer Phosphor-Verbindungen AP zugesetzt: werden, welche ausgewählt sind aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann.

### Das Polymere PM

Ausgangsprodukt für das erfindungsgemäße Verfahren ist ein fertiges Polymerisat PM auf Basis Poly-(meth)acrylimid. Das Verfahren zu seiner Herstellung berührt die vorliegende Erfindung nicht, der diesbezügliche Stand der Technik wird vorausgesetzt. Die Herstellung des Ausgangsproduktes wird z.B. in der DE-A 40 02 904, der EP-A 234 726, der US-A 4 246 374, der US-A 3 246 374 der EP-A 463 754, der EP-A 396 336 und der EP-A 576 877 offenbart.
Die in Formel I beschriebene Struktur ist zu mindestens 5 Gew.%, bevorzugt zu mindesten 30 Gew.%, besonders bevorzugt zu mindesten 60 Gew.-% im Polymerisat enthalten, wobei die Imidgruppe bevorzugt mit Methyl (R₃=Methyl) substituiert ist. Auch R₁ und R₂ in Formel I sind bevorzugt Methylgruppen. Das besonders bevorzugte Polymere enthält demnach (N-Methy)-dimethylglutarimid-Einheiten. Herstellungsbedingt können im Polymerisat nicht nur Glutarimid-Einheiten, sondern auch gering Mengen Säure- und Anhydrideinheiten, sowie restliche (Meth)acrylester enthalten sein. Führt man die Imidierung an einem Polymeren aus, das Styrol, alpha-Methylstyrol, Methacrylonitril Vinylacetat oder andere etylenisch ungesättigte Comonomere wie Ethylen oder Butadien enthält, so bleiben sie von der Umsetzung unberührt und bilden einen Bestandteil der Polymerzusammensetzung des Ausgangsproduktes PM für das erfindungsgemäße Verfahren.

Die bevorzugten Polymerisate auf Basis Poly-N-Methylmethacrylimid sind besonders wärmeformbeständige Thermoplaste. Ihr Vicat-Wert liegt je nach Methylierungsgrad der Imidgruppe bei 120°C bis über 200°C. Erstere Werte werden bei geringen Imidierungsgraden um die 5 %, letztere bei hohen Imiderungsgraden, wobei nur ein Teil der Substituenten an der Imidgruppe Methylreste sind, erzielt.

### Die reduzierenden anorganischen Phosphorverbindungen AP

Die reduzierend wirkenden Phosphorverbindungen AP enthalten Phosphor in den Oxidationsstufen +1 oder +3. Technisch leicht zugänglich sind hierbei Salze der Phosphinsäure (Hypophosphite) und der Phosphonsäure (sekundäre Phosphite), sowie die freien Säuren selbst. Es spielt dabei keine Rolle, ob die Salze oder die freien Säuren in der ortho- oder der meta-Form oder auch z.B. als Dimere vorliegen. Verwendbar sind Alkali-, Erdalkali-, Aluminium- und Ammoniumsalze, wobei das Ammoniumion mit bis zu vier C₁-C₄-Alkyl- und/oder C₅-C₈-Cycloalkylgruppen substituiert sein kann.

Organische, reduzierend wirkende Phosphorverbindungen, ausgewählt aus der Gruppe der aliphatischen oder monoarylaliphatischen Ester sind weit weniger wirksam. Dies gilt vor allem für die verschiedenen Antioxidantien des Standes der Technik auf Basis organischer Phosphite. Besonders effektiv und auch preisgünstig erhältlich ist Natriumhypophosphit Seine Verwendung ist eine bevorzugte Ausführungsform der Erfindung. Obwohl es laut Literatur thermisch leicht unter Disproportionierung zerfällt, hat es sich für die Zwecke der Erfindung gut bewährt.
Stabiler sind Erdalkalihypophosphite, wie z.B. Calciumhypophoshit. Auch die Verwendung dieses Salzes ist eine bevorzugte Ausführungsform. Es können auch Salzmischungen eingesetzt werden.

Unerwartet im Vergleich zum Stand der Technik betreffend die Verwendung von reduzierenden anorganischen Phosphorverbindungen ist, daß erfindungsgemäß bereits geringste Konzentrationen davon ausreichen. So werden mit 0.005 Gew.% bezogen auf das Polymere bereits erkennbare Wirkungen erzielt. Das Maximum an Wirkung kann bereits mit 0.02 bis 0.05 Gew.% erreicht sein. Meist ist es nicht geraten, die Konzentration höher als 0.1 Gew.% zu wählen. Es ist nicht sinnvoll, mehr als 1 Gew.% an reduzierender anorganischer Phosphorverbindung AP zuzusetzen, da hier bereits starke Eigenschaftsverschlechterungen beobachtet werden, wie z.B. eine Trübung im Polymerisat oder eine verschlechterte Witterungsbeständigkeit. Demnach sind Konzentrationen an reduzierend wirkenden anorganischen Phosphorverbindungen von mindestens 0.005 und weniger als 0.1 Gew.-% bezogen auf Polymeres PM bevorzugt.
Die erfindungsgemäßen anorganischen reduzierenden Phosphorverbindungen AP werden in der Regel in Lösung appliziert. Meist ist Wasser als Lösungsmittel am besten geeignet. Vorteilhaft werden die reduzierenden Phosphorverbindungen in möglichst konzentrierter Lösung angewandt. Als Richtwert sei eine Konzentration von 50 Gew.-% genannt. Sie ist bei Raumtemperatur üblich. Je nach Löse- und Applikationstemperatur sind auch andere Konzentrationen möglich bzw. notwendig, z.B. 30 bis 65 Gew.-%. Es ist überraschend, daß selbst ein so geringes Volumen an reduzierendem Agens, wie es eine konzentrierte Lösung der Phosphorverbindung darstellt, offensichtlich über die gesamte Polymercharge homogen verteilt werden kann.
Es ist aber auch möglich, die reduzierende anorganische Phosphorverbindung in Pulverform, also ohne Verwendung von Lösungsmittel zu applizieren.
Auch wenn es prinzipiell möglich ist, die Komponenten einer Mischung von reduzierenden Phosphorverbindungen nacheinander dem Polymeren zuzugeben, wird man in der Regel zuerst eine Mischung oder Lösung der Komponenten herstellen und diese in einem Schritt dem Polymeren zusetzen. Für die homogene Verteilung ist ein einkomponentiger Stabilisator vorteilhafter.

Auf die Zugabe von Blaupigmenten oder blauen Farbstoffen zur optischen Neutralisation eines allfälligen Gelbstiches kann ohne weiteres verzichtet werden.

### Einarbeitung der reduzierend wirkenden anorganischen Phosphorverbindung AP

Die Einarbeitung der reduzierend wirkenden anorganischen Phosphorverbindung AP erfolgt erfindungsgemäß zu einem späten Zeitpunkt der Verarbeitung. Dadurch scheint ein vorzeitiger Zerfall des Entfärbungsmittels vermeidbar zu sein. Es wird vor allem nicht, wie im Stand der Technik, den hohen thermischen Belastungen bei der Imidierung ausgesetzt. Die Zugabe erfolgt keinesfalls in den Reaktionsextruder, auf jeden Fall nach der Reaktionszone. Der späte Zeitpunkt und der Modus der Einarbeitung sind entscheidende Merkmale der Erfindung.

Eine Möglichkeit ist die Einarbeitung der reduzierend wirkenden anorganischen Phosphorverbindung unmittelbar nach Abschluß der Imidierungsreaktion in den dem Reaktionsextruder nachgeschalteten Entgasungsextruder. Die Dosierstelle wird so gewählt, daß die Zugabe in die bereits entgaste Schmelze erfolgt. Der Vorteil dieser Zugabemethode ist, daß kein zusätzlicher Verarbeitungsschritt notwendig ist und sie sich nahtlos an die Reaktion anschließt.

Eine weitere Möglichkeit ist die Zugabe der reduzierend wirkenden anorganischen Phosphorverbindung zum fertigen Polymerisat beim Compoundieren.
Zur Durchführung dieses erfindungsgemäßen Verfahrens soll das Polymerisat in Teilchenform vorliegen. Geeignet sind z.B. besonders Granulate oder auch Mahlgut in den verschiedensten Mahlgraden. Bevorzugt wählt man eine mittlere Teilchengröße von 1-5mm. Die Vermischung der reduzierenden anorganischen Phosphorverbindung mit dem in Teilchenform vorliegenden Polymeren PM erfolgt üblicherweise zunächst in langsam laufenden Mischaggregaten wie beispielsweise Trommel-, Rhönrad- oder Doppelkammerpflugscharmischern. Die langsam laufenden Aggregate bewirken eine Vermischung, ohne daß die Phasengrenzen aufgehoben werden (vgl. Ullmanns Enzyklopädie der technischen Chemie, 4.Auflage, Bd. 2, Seiten 282 bis 311 Verlag Chemie, Weinheim, New York, 1980). Diese Mischung wird im nachfolgenden Verarbeitungsschritt des Aufschmelzens thermoplastisch aufbereitet. Man verwendet hierzu heizbare Mischaggregate bei den dafür geeigneten Temperaturen, in der Regel zwischen 250 und 350°C. Beispielsweise sind solche heizbaren Mischaggregate Ein- oder Mehrschneckenestruder oder Extruder mit oszillierender Schnecke sowie gegebenenfalls zusätzlich mit Scherstiften. Mit diesem Verfahren können die erfindungsgemäßen Formmassen FM in Korngrößen von beispielsweise 1 bis 5 mm hergestellt werden.

Eine weitere Zugabevariation besteht darin, das imidierte Poly(meth)acrylat, das bereits in granulierter oder gemahlener Form vorliegt in einem separaten Extruder wieder aufzuschmelzen, und die reduzierend wirkenden anorganischen Phosphorverbindungen PM der Schmelze zuzusetzen. Sie kann hier z.B. als Lösung eingepumpt werden. Man erhält hier nach Abkühlen und Schneiden ebenfalls die erfindungsgemäße Formmasse FM. Vorteilhaft läßt sich diese Zugabevariation mit einer unmittelbar anschließenden formgebenden Verarbeitung verbinden.

Die erfindungsgemäßen Formmassen FM werden zu Formkörpern FK verarbeitet. Dazu sind gebräuchlichen Verfahren der Technik wie Spritzgießen, Extrudieren, Pressen, Sintern, sowie auch andere Formgebungsverfahren geeignet. Der Gestaltung der Formkörper sind keine Grenzen gesetzt. Entsprechend ihrer hohen Wärmeformbeständigkeit liegt der Schwerpunkt der Anwendung naturgemäß bei Formkörpern, die hohen Temperaturen ausgesetzt sind, wie beispielsweise bei Lampenabdeckungen oder Linsen in der Beleuchtungtechnik, sowie bei Formteilen im temperaturbelasteten Bereichen von Kraftfahrzeugen wie bei Scheinwerferstreuscheiben, Rückleuchten oder Nebelleuchten u. a.

### Vorteilhafte Wirkungen der Erfindung

Das Verfahren der Einarbeitung der reduzierenden anorganischen Phosphorverbindung ist in der Regel ein einzelner, einfacher Verfahrensschritt, weil das Stabilisierungsmittel als eine Komponente zugesetzt wird. Es ist vorteilhaft, daß in das Herstellverfahren selbst nicht eingegriffen zu werden braucht, da das Polymere ein gängiges Produkt ist und bereits im technischen Maßstabe hergestellt wird. Bezüglich der Menge und der chemischen Natur der reduzierenden anorganischen Phosphorverbindung AP ist das Verfahren sehr kostengünstig: Es wird nur wenig Stabilisator gebraucht, und gerade im Fall des Natrium-Hypophosphit ist er besonders preisgünstig.

Wichtig sind die anwendungstechnischen Vorteile. So ist der erfindungsgemäße Formkörper nach Durchführung des erfindungsgemäßen Verfahrens praktisch farblos. Sein Gelbwert oder Yᵢ-Gelbindex - er wird nach DIN 6167 (D65/10) bzw. nach ASTM D 1925 gemessen - liegt bei unter 2, bevorzugt unter 1. Häufig werden sogar Werte unter 0.5 erhalten. Probekörper, die nicht der erfindungsgemäßen Behandlung unterworfen wurden, die also ohne Zugabe von reduzierend wirkenden anorganischen Phosphorverbindungen compoundiert wurden, haben in der Regel Gelbwerte über 3.
Anstelle des Gelbwertes kann auch die Transmission einer spritzgegossenen Scheibe mit den Maßen von 60x45x3 mm zur Charakterisierung der optischen Eigenschaften herangezogen werden. Die Transmission einer erfindungsmäßig hergestellten Scheibe liegt nahe dem theoretischen Wert von 92% Transmission, nämlich bei 86 bis 92 % je nach Imidierungsgrad.

Der entscheidende Vorteil des erfindungsgemäßen Verfahrens ist indes die hervorragende Farbstabilität des Formkörpers bei fortdauernder thermischer Belastung. Zwar ist eine Zunahme des Gelbwertes nicht ganz vermeidbar, aber sie ist deutlich geringer als im Stand der Technik. Geprüft wird die Farbstabilität eines Formkörpers FK durch eine thermische Belastung einer Prüfscheibe im Umluft-Trockenschrank bei 160°C bis zu 1000 Stunden Lagerzeit. In bestimmten Zeitabständen wird der Gelbwert überprüft, wobei eine Kurve der Gelbwertzunahme erstellt werden kann. Erfindungsgemäße Formkörper zeigen eine Gelbwertzunahme im Schnitt nur von <0.02 pro Stunde. Es sind sogar Gelbwertzunahmen von weniger als 0.01 pro Stunde möglich. In Versuchen der Anmelderin - siehe Beispiele - wurden bei einer thermischen Belastung von 160°C über 800 Stunden Gelbwerte von <15, in der Mehrzahl der Fälle <10 erreicht.

Die erfindungsgemäßen Formmasssen FM finden auch Anwendung bei der Herstellung optisch anspruchsvoller Formteile. Gerade bei besonders langen Fließwegen und/oder komplizierten Formteilgeometrien sind hohe Verarbeitungstemperaturen notwendig. Hier stabilisieren die erfindungsgemäßen, reduzierenden, anorganischen Phosphorverbindungen AP gegen eine Vergilbung des Formteils bei seiner Herstellung.

### BEISPIELE

### Beispiel 1:

### Vergleichsbeispiel nach dem Stand der Technik: Hypophosphitzugabe in das Reaktionsgemisch bei der Imidierung

Auf einer Reaktionsextrusionsanlage bestehend aus einem Reaktionsextruder mit einem hochwirksamen Mischteil und einem Entgasungsextruder mit zwei Entgasungszonen und angeschlossenen Vakuumleitungen wurde die polymeranaloge Reaktion, nämlich die Imidierung durchgeführt. Pro Stunde wurden in den Reaktionsextruder 10 kg einer PMMA-Formmasse eingebracht. Im ersteren Teil der Mischstrecke befinden sich zwei Einspeisestellen für Flüssigkeiten. In die erste Einspeisestelle wurde eine Menge von 200 ml pro h einer 50 % igen wässrigen Lösung von Natriumhypophospit eingepreßt. Über die zweite Einspeisestelle wurde als Reaktionsmittel 3000 g Methylamin pro h zugeführt. Die mittlere Reaktionszeit betrug 5 Minuten bei einer Temperatur von 250°C. Nach Abschluß der Reaktion wurde die Reaktionsmischung im Entgasungsextruder entspannt, die gasförmigen und flüchtigen Anteile entfernt, und schließlich Stränge extrudiert, die gekühlt und zu Granulat geschnitten wurden.

Die Zugabe der reduzierend wirkenden anorganischen Phosphorverbindung erfolgte somit gemäß EP-A 576 877 in das Reaktionsgemisch bei der Imidierungsreaktion.

Von dem erhaltenen Produkt wurde auf einer Spritzgießmaschine Battenfeld BA 300/100 eine Reihe von Probekörpern 65x40x3mm spritzgegossen und daran der Gelbwert nach DIN 6167 bestimmt. Der gemessene Gelbwert betrug 1,4. Die nach ISO 306, Verfahren B 50, bestimmte Vicat- Erweichungstemperatur betrug 172,4°C.

Von den spritzgegossenen Probekörper wurden vier Stück in einen Umluftwärmeschrank gelegt und bei 160°C 1000 Stunden gelagert. Nach jeweils 500 h, 800 h und 1000 h Lagerzeit wurde ein Probekörper entnommen, abgekühlt und der Gelbwert gemessen. Es wurden folgende Ergebnisse erhalten:

**Tab 1**

| Gelbwerte von imidiertem Polymethylmethacrylat bei Warmlagerung in Abhängigkeit von der Lagerzeit: | | | | |
|---|---|---|---|---|
| Lagerzeit bei 160°C (h) | 0 | 500 | 800 | 1000 |
| Gelbwert [-] | 1,4 | 12,6 | 23,1 | 32,6 |

Deutlich erkennt man eine starke Zunahme des Gelbwertes bei Warmlagerung bei Anwendung des nicht erfindungsgemäßen Verfahrens nach dem Stand der Technik.

### Beispiel 2: (Erfindungsgemäß)

Auf der Imidierungsanlage gemäß Beispiel 1 wurde unter identischen Bedingungen die Imidierungsreaktion durchgeführt, wobei keine Natriumhypophosphitlösung in den Reaktionsxtruder eingepreßt wurde. Nach der Entfernung der gasförmigen Reaktionsbestandteile wurden Stränge des Polymeren gezogen, diese abgekühlt und zu Granluat geschnitten.

Vom erhaltenen Granulat wurden 15 kg in ein Edelstahlfaß von 30 l eingefüllt und eine Menge von 150g Natriumhypophospit als 50% ig wässrige Lösung eingewogen. Die Zugabe des Natriumhypophosphits erfolgte hier erfindungsgemäß demnach erst vor dem Compoundieren. Auf einem Taumelmischer wurden die Komponenten 4 Minuten innig vermischt und in den Trichter eines 25 mm (=d) Einschneckenextruders eingebracht. Auf dem 32 x d langen Einschneckenextruder wurde die Mischung compoundiert und dann entsprechend Beispiel 1 Probekörper spritzgegossen. Der an ihnen gemessene Gelbwert betrug 0.8.

Gemäß Beispiel 1 wurden 4 Probekörper des erfindungsgemäß stabilisierten Produktes einer Temperaturbelastung bei 160°C über 1000 Stunden unterworfen. Es konnten folgende Resultate erhalten werden:

**Tab 2**

| Gelbwerte von imidiertem Polymethylmethacrylat bei Warmlagerung in Abhängigkeit von der Lagerzeit: | | | | |
|---|---|---|---|---|
| Lagerzeit bei 160°C (h) | 0 | 500 | 800 | 1000 |
| Gelbwert [-] | 0,8 | 3,9 | 8,0 | 10,2 |

Deutlich erkennt man eine nur geringe Zunahme des Gelbwertes bei Warmlagerung bei Durchführung nach dem erfindungsgemäßen Verfahren.

### Beispiel 3: (Erfindungsgemäß)

Auf der Reaktionsanlage zur Herstellung von imidiertem Polymethylmethacrylat gemäß Beispiel 1 wurde die örtliche Zugabe der Natriumhypophosphitlösung dahingehend verändert, daß nunmehr nicht in den Bereich des Reaktors sondern in den nachgeschalteten Entgasungsextruder die wässrige Natriumhypophosphitlösung zugegeben wurde. Die Dosierstelle wurde so gewählt, daß die Zugabe in die von flüchtigen und entgasbaren Bestandteilen befreite Schmelze erfolgte. Von dem erhaltenen Granulat wurden gemäß Beispiel 1 Probekörper hergestellt und über eine Zeitdauer von 1000 h bei 160°C thermisch belastet.

Bei Temperaturbelastung gemäß Beispiel 1 zeigte das erfindungsgemäß stabilisierte Produkt folgende Gelbverfärbung:

**Tab 3**

| Gelbwert von imidiertem Polymethylmethacrylat bei Warmlagerung in Abhängigkeit von der Lagerzeit: | | | | |
|---|---|---|---|---|
| Lagerzeit bei 160°C (h) | 0 | 500 | 800 | 1000 |
| Gelbwert [-] | 0,3 | 3,2 | 7,1 | 9,2 |

Deutlich erkennt man ein nur geringe Zunahme des Gelbwertes bei Warmlagerung. Auch hier war das Natriumhypophosphit erst nach Abschluß der Imidierungsreaktion zugegeben worden.

## Patentansprüche

1. Verfahren zur Herstellung von Formmassen FM mit bei thermischer Belastung verringerter Tendenz zur Gelbfärbung, bestehend aus einem Polymerisat PM, welches Einheiten der Formel I 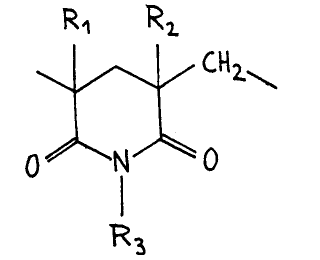 enthält, in der R₁ und R₂ für Wasserstoff und Methyl stehen und R₃ Wasserstoff, C₁-C₁₈-Alkyl, C₅-C₈-Cycloalkyl, C₆-C₁₀-Aryl, C₆-C₁₀-Aryl-C₁-C₄-alkyl bedeutet, wobei diese Reste bis zu dreifach mit Resten ausgewählt aus der Gruppe bestehend aus C₁-C₄-Alkyl, C₁-C₄-Alkoxy und Halogen substituiert sein können, hergestellt in einer an sich bekannten Imidisierungsreaktion in einem Reaktionsextruder,
dadurch gekennzeichnet,
daß dem Polymerisat PM nach Abschluß der Imidierungsreaktion 0.005 bis 1 Gewichtsprozent einer oder mehrerer reduzierend wirkender anorganischer Phosphor-Verbindungen AP zugesetzt werden, welche ausgewählt sind aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann.

2. Verfahren gemäß Anspruch 1, dadurch gekennzeichnet, daß die reduzierend wirkende anorganische Phosphorverbindung AP in einer Menge von unter 0,1 Gew-% und wenigstens 0.005 Gew.-% bezogen auf das Polymerisat PM zugesetzt wird.

3. Verfahren gemäß Anspruch 1 oder 2, dadurch gekennzeichnet, daß die reduzierend wirkende anorganische Phosphorverbindung AP Natriumhypophosphit ist.

4. Verfahren gemäß Anspruch 1 oder 2, dadurch gekennzeichnet, daß die reduzierend wirkende anorganische Phosphorverbindung AP Calciumhypophosphit ist.

5. Verfahren gemäß einem oder mehreren der Ansprüche 1 bis 4, dadurch gekennzeichnet, daß die reduzierend wirkende anorganische Phosphorverbindung in wäßriger Lösung zugesetzt wird.

6. Verfahren gemäß einem oder mehreren der Ansprüche 1 bis 5, dadurch gekennzeichnet, daß die Zugabe der reduzierend wirkenden anorganischen Phosphorverbindung AP zu dem in Teilchenform vorliegenden Polymerisat PM durch Vermischen erfolgt.

7. Verfahren gemäß einem oder mehreren der Ansprüche 1 bis 5, dadurch gekennzeichnet, daß die Zugabe der reduzierend wirkenden anorganischen Phosphorverbindung AP in eine von flüchtigen Bestandteilen befreite Schmelze des Polymeren PM erfolgt.

8. Verfahren gemäß Anspruch 7, dadurch gekennzeichnet, daß die Zugabe der reduzierend wirkenden anorganischen Phosphorverbindung AP kontinuierlich in einen dem Reaktionsextruder nachgeschalteten Entgasungsextruder erfolgt.

9. Formkörper FK erhältlich aus Formmassen FM gemäß einem oder mehreren der Ansprüche 1 bis 8.

10. Formkörper FK gemäß Anspruch 9, dadurch gekennzeichnet, daß er einen Gelbwert von <2, bevorzugt <1 aufweist.

11. Formkörper FK gemäß Anspruch 9, dadurch gekennzeichnet, daß die Zunahme des Gelbwertes bei einer thermischen Belastung von 160 C über 800 Stunden nicht über 15, bevorzugt nicht über 10 liegt.

12. Formkörper FK gemäß Anspruch 9, dadurch gekennzeichnet, daß die Transmission einer 3mm dicken Scheibe im Wellenlängenbereich des sichtbaren Lichts bei einer thermischen Belastung von 160 C über 800 Stunden nicht unter 85% abnimmt.
